# EUROPEAN PATENT APPLICATION

(11) **EP 1 639 894 A1**
(43) Date of publication of application: **29.03.2006**
(21) Application number: 05104264.6
(22) Date of filing: 11.06.2001
(51) Int. Cl.: A01N 25/10, A01N 31/06

(54) **Non-toxic coating composition, methods of use thereof and articles protected from attachment of biofouling organisms**

(30) Priority: 12.06.2000 US 591721; 08.06.2001 US 878029
(62) Divisional of application: 01942251.8
(71) Applicant: Symrise GmbH & Co. KG, 37603 Holzminden (DE)
(72) Inventor: MATIAS, Jonathan R., 11423, Hollis, New York (US)
(74) Representative: Eisenführ, Speiser & Partner

(57) **Abstract**

Antifouling coating compositions and methods are disclosed, in which the active agent is preferably (-)trans-p-menthane-3,8-diol, (-)-menthol, (-)-menthyl chloride, menthoxypropanediol, (-)-isopulegol or (-)-menthone.

## Description

### Background of The Invention

The present invention relates to non-toxic coating compositions which provide protection to surfaces coated therewith from attachment of various biofouling organisms. These compositions are advantageously used in paint, varnish and sealant formulations.

Biocides are commonly used in a variety of coating materials having diverse applications. In marine paints, for example, biocides protect underwater structures against attachment of a wide range of biofouling organisms, such as algae, barnacles, ship worms and other aquatic nuisance species. In lakes and rivers, biocides are used to protect underwater structures from freshwater organisms, such as zebra mussels. It has been found that microorganisms, their viscous, bio-organic product and absorbed organic matter constitute a tenacious slime which forms on the surfaces of submerged structures. The initial organisms in this fouling sequence are bacteria, followed by a biotic progression of diatoms, hydrids, algae, bryozoans, protozoans and finally macrofoulants. Macrofoulants tend to be rugophilic, i.e., settling on roughened surfaces in preference to smooth surfaces.

The fouling of ship bottoms is a longstanding problem, which contributes to speed reduction and increased fuel consumption. The problem of fouling is not limited to ships, however, but extends to other underwater structures, as well. Buoys can shift due to the excessive weight of fouling organisms. Wood pilings in berthing facilities undergo structural weakening and ultimate destruction due to ship worm and fungal attack. The fouling of intake screens of municipal water supply systems can lead to reduced flow rates and accelerated corrosion. Concrete or ferro-cement structures, e.g., dams, are also adversely affected by biofouling organisms.

It is understood by those of skill in the art that a marine coating must be water resistant in order to provide practical and effective protection. The expression "water resistant," as used in describing the composition of the invention, refers to its ability to provide a durable, protective barrier that can effectively withstand hydrolytic attack and is essentially impermeable to water. Water resistance is intrinsically important to marine coatings because, for example, it is prohibitively expensive to re-coat most items in marine service, as they must be put into dry-dock or otherwise removed from the water in order to be re-coated. It is also desirable, for example, to minimize the time and expense of cleaning fouling organisms from the coated surface. The protection provided by a marine coating, therefore, whether it be against corrosion, fouling, abrasion, etc., should be effective over a period of at least months, and, ideally, over at least several years. A coating composition that is not water resistant would be short lived in the water rather than meeting the performance criteria of a marine coating.

The majority of commercial anti-fouling coatings include organometallic compounds which are potent biocides that leach over time from the coating material. Tributyltin (TBT), for example, is known to be highly toxic to shellfish. Anderson and Dally, Oceans '86, IEEE Publication #86 CH2363-0 (1986). Acute toxicity in invertebrates and vertebrates occurs at concentrations as low as 1 *µ*g (micrograms) per liter. Laughlin et al., Mar. Ecol. Prog. Ser., 48: 29-36 (1988). Cuprous oxide and zinc oxide, which are other commercially used antifoulants, also function by releasing heavy metals, i.e., copper and zinc, into the marine environment.

In latex architectural paints and wood stains, biocides provide in-can protection against microbiological contamination that can cause odor and changes in viscosity and color, and protect the dried film and underlying substrate from damaging microorganisms. Such coating materials must likewise be water resistant in order to provide effective protection to coated surfaces.

Biocides are also conventionally utilized in elastomeric coatings, adhesives, caulks, glazing compounds, joint cements and the like, which are also water resistant.

Because certain biocides currently used in the above-mentioned products have been shown to be ecologically harmful, a number of international agencies, whose missions include monitoring environmental quality, are urging the curtailment and eventual termination of their manufacture and use. A proposal has been made by the International Maritime Organization (IMO), for example, that all antifoulant coatings that contain TBT, as well as other organotin compounds which have a toxic effect on a wide range of marine organisms, would be banned worldwide by the year 2003. Consequently, manufacturers of such products are faced with the prospect of changing existing formulations to include alternative agents that are, at once, effective in preventing attachment and growth of biofouling organisms and environmentally benign. Other criteria that must be taken into account in developing acceptable substitutes for ecologically harmful biocides include chemical compatibility with other components in the coating composition, physical compatibility with the dried film and substrate to which the coating is applied, the safety of those handling or using the substitute agents themselves or coating materials containing them and the cost of their production.

### Summary of The Invention

In accordance with one aspect, the present invention provides a non-toxic coating composition comprising (i) a compound of the formula: 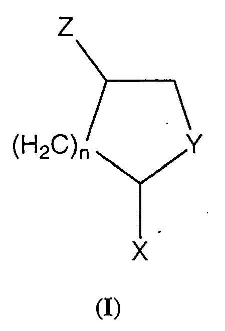 wherein:
n is an integer 1, 2, or 3;
X represents hydrogen or a straight or branched chain, substituted or unsubstituted alkyl or a straight or branched chain, substituted or unsubstituted alkenyl;
Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
R^{a}, R^{b}, and R^{c} is each independently selected from the group consisting of hydrogen and straight or branched chain, substituted or unsubstituted alkyl; and
Z is hydrogen or a straight or branched chain, substituted or unsubstituted alkyl, including all isomeric forms of formula (I); and (ii) a film forming agent.

The compound of formula (I) is present in the composition in an amount effective to inhibit the attachment of biofouling organisms on a surface to which the composition is applied as a coating.

Also in accordance with this invention, there is provided a paint comprising the above-described composition, preferably a marine paint.

There is also provided in accordance with this invention certain methods of use of coating materials including the compounds of Formula I above. One such method involves protecting a surface exposed to an aqueous environment from fouling organisms present in the aqueous environment by applying to such surface a coating including one or more of the above-described compounds. Another method entails protecting a coated surface from attachment and growth of undesired fungal organisms, such as molds, mildew and the like by including in the coating formulation applied to such surface at least one of the above-described compounds.

As another aspect of this invention, articles are provided which have a coating of the composition described herein on at least a portion of the surface thereof, which provides protection against exposure to the deleterious effects of biofouling organisms.

The coating composition described above satisfies all of the above-noted criteria for an environmentally acceptable coating product, in that it provides effective protection against attachment and growth of biofouling organisms, while producing no known ecologically harmful effect. Moreover, the compounds of Formula I above have been shown to be compatible, both chemically and physically, with conventional marine and other paint formulations, are safe to handle and can be obtained at a relatively low cost.

Preferred compounds for use in the practice of this invention are (-)-menthol, (-)-trans- p-menthan-3,8-diol, (-)-menthyl chloride, 3-[[5-methyl-2-(1-methylethyl)cyclohexyl]oxy]-1,2-propanediol (also known as menthoxypropanediol), 5-methyl-2-(1-methylethenyl) cyclohexanol (also known as (-)-isopulegol), and (-)-menthone, which have been found to be particularly effective antifouling agents, as will be described in detail hereinbelow.

Known uses of menthol include liqueurs, confectionary, perfumery, cigarettes, cough drops and nasal inhalants. It has also been applied as a topical antipruitic, and in veterinary medicine as a mild local anesthetic and antiseptic as well as an internal carminative and gastric sedative. Menthan-3,8-diol and derivatives thereof have been reported to be effective repellants against noxious insects including mosquitos, ticks and mites. Insofar as is known, however, neither menthol nor p-menthan-3,8-diol, or any optical isomer thereof, has previously been proposed for use in a coating composition for protecting surfaces coated therewith from the deleterious effects of biofouling organisms.

### Brief Description of The Drawings

FIG. 1 is a graphical representation showing the effect of (-)-trans-p-methan-3,8-diol on settlement of cyprid larvae of the barnacle, *Balanus amphitrite* Darwin, as determined by barnacle settlement inhibition assay.
FIG. 2 is a graphical representation showing the effect of (-)-menthol on settlement of the cyprid larvae of the barnacle, *B. amphitrite* Darwin, as determined by barnacle settlement inhibition assay.
FIG. 3 is a graphical representation showing the effect of (-)-menthol against the bacteria associated with *B. amphitrite* Darwin, as determined by agar diffusion technique.
FIG. 4 is a graphical representation showing the effect of (-)-menthol against the bacteria associated with *Perna sp.,* as determined by agar diffusion technique.
FIG. 5 is a graphical representation showing the effect of (-)-menthol, at different concentrations, on the growth of *Dunaliella tertiolecta,* as determined by *in vitro* cell growth inhibition assay.
FIG. 6 is a graphical representation showing the effect of (-)-menthol, at various concentrations, on the growth of *Nitzchia sp.,* as determined by *in vitro* cell growth inhibition assay.

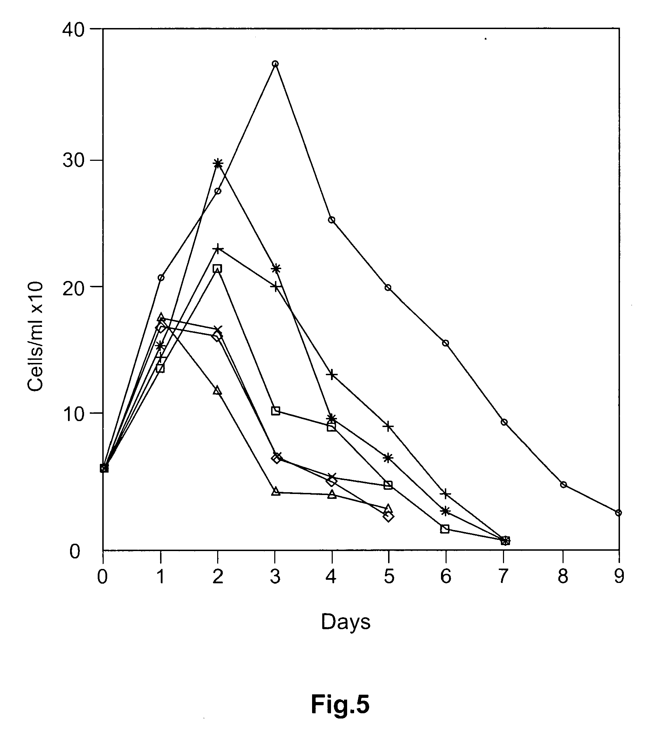

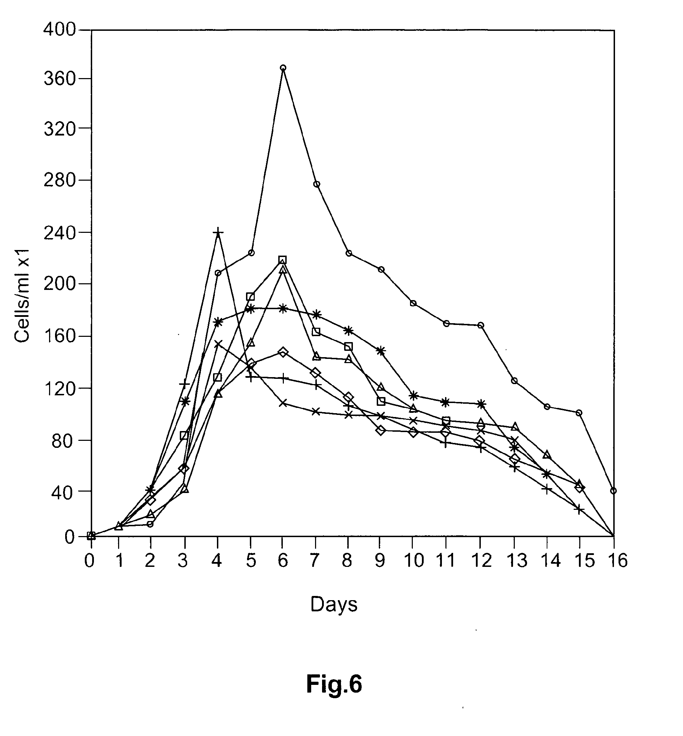

In FIGS. 5 and 6 the different concentrations of (-)-menthol (in mg/ml) are represented as follows:
--+-- (0.00001); --∗-- (0.0001); --□-- (0.001)
--X-- (0.01); --◇-- (0.1); --Δ-- (1.0);
--•-- (control).

### Detailed Description of The Invention

It has been discovered in accordance with the present invention, that compounds of Formula (I), above, are useful for inhibiting the attachment of biofouling organisms on surfaces, particularly those of underwater structures, to which a coating composition comprising one or more such compounds is applied.

As used herein, the term "biofouling organisms" refers to any and all organisms that participate in the fouling sequence in both saltwater and freshwater environments, including, without limitation, bacteria, diatoms, hydrids, algae, bryozoans, protozoans and macro-foulants.

Particularly preferred for use in the practice of the invention are compounds having the formula: 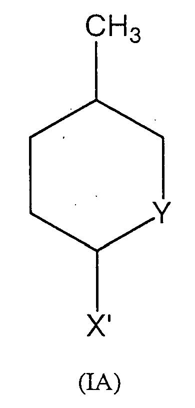 wherein X' represents hydrogen or a straight or branched chain, substituted or unsubstituted lower alkyl, or a straight or branched chain, substituted or unsubstituted lower alkenyl, and Y represents C=O, HC-OR', or HC-Cl, R' being a radical selected from the group consisting of hydrogen or acyl, including all isomeric forms of formula (IA).

The following definitions apply to formulas (I) and (IA), above:

The term "alkyl" refers to straight-chain, branched, or cyclic unsubstituted hydrocarbon groups of 1 to 12 carbon atoms. The expression "lower alkyl" refers to unsubstituted, straight or branched alkyl groups of 1 to 6 carbon atoms.

The term "substituted alkyl" refers to an alkyl group substituted by, for example, 1 to 25 substituents, and most preferably one to four substituents. The substituents may include, without limitation, halo, hydroxy, alkoxy, cycloalkoxy, oxo, amino, monoalkylamino, dialkylamino, aryl and substituted aryl. Among the alkyl substituents noted above, particularly preferred are hydroxy substituents.

The term "alkenyl" refers to refers to straight-chain, branched, or cyclic, unsubstituted, unsaturated hydrocarbon groups of 1 to 12 carbon atoms. The expression "lower alkenyl" refers to unsubstituted alkenyl groups of 1 to 6 carbon atoms.

Examples of alkenyl groups include ethenyl, propenyl, butenyl, pentenyl, and the like.

The term "substituted alkenyl" refers to an alkenyl group substituted by, for example, 1 to 24 substituents, and most preferably one to four substituents. The substituents are the same as those described for alkyl groups.

The term "aryl" refers to monocyclic or bicyclic aromatic hydrocarbon groups having 6 to 12 carbon atoms in the ring portion, such as phenyl, naphthyl, biphenyl and diphenyl groups, each of which may be substituted.

The term "substituted aryl" refers to an aryl group substituted by, for example, one to seven substituents, and, preferably, one to four substituents such as those disclosed for alkyl and alkenyl groups, above.

The term "acyl" as used herein refers to the radical C(O)R, in which the R group may be an alkyl, alkenyl, aryl, aralkyl or cycloalkyl group. The R group may be straight or branched chain, substituted or unsubstituted. When the R group is substituted, it will be substituted with at least one substituent selected from the group consisting of halogen, hydroxy, alkyl, alkenyl, alkoxy, aryl or aralkyl groups.

The term "halogen" refers to F, Cl, Br, or I.

When a moiety is described herein as substituted with more than one substituent, it is intended that each of the multiple substituents be chosen independently from among the substituents mentioned above.

Many of the compounds described herein can be derived or extracted from natural products and have no appreciable harmful effect on animal or plant life. The compounds are obtainable from commercial sources, or may be synthesized from readily available starting materials using known synthetic routes. See, for example, K. Nicolaou and E. Sorensen, Classics in Total Synthesis, Chapter 22, VCH Publications, Inc., New York, NY (1996); Agric. Biol. Chem., 46(1); 319 (1982); and J.A.C.S., 75:2367 (1953), the entire disclosures of which are incorporated herein by reference.

All of the isomeric forms of the compounds of Formula (I), above, may be used in practicing this invention, including structural isomers and stereoisomers. In the case of the compound having the empirical formula C₁₀H₂O, for example, the isomers may be (+)-neomenthol, (+)-isomenthol or (+)-neoisomenthol. The *cis* and *trans* forms of p-menthan-3,8-diol may likewise be used in the practice of this invention.

Esters of the compounds described above, e.g., wherein Y comprises an acyl group, are suitable for use in this invention, lower alkyl esters being preferred. Representative examples of such esters are those formed from C₁ - C₆ alkanoic acids, which may be either straight or branched. Other esters which may be used in the practice of this invention include aryl esters, i.e. those formed from carbocyclic aromatic acids, such as benzoic acid, phthalic acid, naphthoic acid and the like, as well as chloroformic acid esters.

Preferred compounds for use in the present invention include (-)-menthol (Formula II), (-)-trans- p-menthan-3,8-diol (Formula III), (-)-menthyl chloride (Formula IV), 3-[[5-methyl-2-(1-methylethyl)cyclohexyl]oxy]-1,2-propanediol (also known as menthoxypropanediol) (Formula V), 5-methyl-2-(1-methylethenyl) cyclohexanol (also known as (-)-isopulegol) (Formula VI), and (-)-menthone (Formula VII).

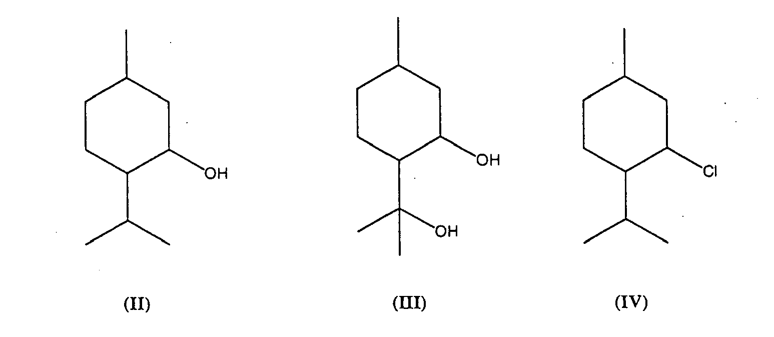

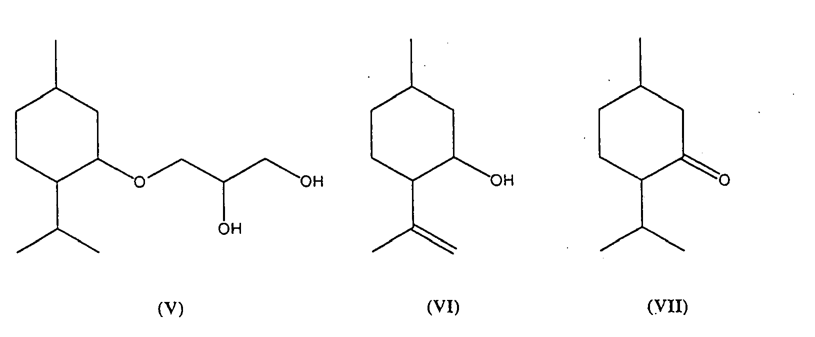

The compounds shown in Formula I may be included in a conventional paint composition as the sole antifouling agent, or added in combination with other antifouling agents, biocides, antibiotics, and natural products or extracts to produce an additive or synergistic effect on attachment of biofouling organisms. Examples of non-toxic antifouling agents include decalactone , alpha-angelicalactone, alpha-santonin, alpha-methyl-gamma-butyrolactone and alantolactone. Exemplary biocides (fungicides and algaecides) include isothiazolones (such as Sea Nine-211), zinc omadine, chlorothalonil, and triazine algaecide. A typical example of a suitable antibiotic is tetracycline, which is a registered antifoulant. Compounds of Formula I may also be combined with organometallic antifoulants, such as tributyl tin or triphenyl tin, or inorganic antifoulants such as zinc oxide or cuprous oxide, to reduce the total amount of toxic antifoulants in a given coating material.

The film-forming component of the composition of the present invention may be any component or combination of components that is readily applied and adheres to the surface to be protected when the surface is submerged. The specific film-forming component to be selected for a particular application will vary depending on the material and construction of the article to be protected and the performance requirements thereof. After a surface is provided with a protective coating in accordance with this invention, the active ingredient in Formula I that is present in the coating comes in contact with biofouling organisms, thereby preventing their attachment. A variety of synthetic polymers are useful for this purpose. Examples of suitable polymer resins include unsaturated polymer resins, vinyl ester, vinyl acetate, and vinyl chloride based resins and urethane based resins. Unsaturated polyester resins are formed from unsaturated acids and anhydrides, saturated acids and anhydrides, glycols, and glycol monomers. Preferred film-forming components are mixtures of natural rosin and vinyl chloride-vinyl acetate copolymers. A commercial marine paint vehicle which is suitable for the practice of this invention is Amerlock 698, a product of Ameron International, Pasadena, CA. Comparable marine paint vehicles are also available from Jotan, AS, Sandefjord, Norway.

The coating composition of the invention may include components in addition to a compound or compounds of Formula (I) above, and a film-forming component, so as to confer one or more desirable properties, such as increased or decreased hardness, strength, increased or decreased rigidity, reduced drag, increased or decreased permeability, or improved water resistance. The selection of a particular component or group of components to impart such properties are within the capabilities of those having ordinary skill in the art.

The coating composition of the present invention may be used in various paint formulations, marine paints being preferred.

The percentage of the active agent in the coating composition required for effective protection against biofouling agents may vary depending on the active agent itself, the chemical nature of the film former, as well as other additives present in the composition that may influence the effectiveness of the active agent. Generally, the active agent comprises between about 0.01 and about 50 percent of the coating composition by weight, and preferably between about 0.1 and about 10 percent by weight of the composition.

The compounds of Formula (I) may be included in a paint formulation during the paint manufacturing processes or added to the paint at the time of use. The compounds in Formula I can be simply mixed into the film-forming components. This is known as a "free association" coating, which allows leaching of the compound of Formula I from the film-forming components. The antifouling agent may be covalently bound to the resin, known as "ablative or self-polishing coating" and is released only after the bond hydrolyzes in seawater. Controlled hydrolysis permits a slow release rate while creating a hydrophilic site on the resin. A new layer of bound compound of Formula I is then exposed when the hydrolyzed layer is washed away. *See also,* Tiller *et al.* in *Proc. Natl. Acad. Sci.,* 2001, 98, 5981-5985, the entire contents of which are incorporated by reference herein. Furthermore, the compounds of Formula I may also be incorporated with slow release materials which permit the controlled release of the compounds into the matrix of the coating, thereby prolonging the effectiveness of the coating and reducing the amount of compounds necessary to produce the antifouling effect. Encapsulation into such slow release materials also protects the compounds of Formula I from the harsh chemical milieu of the coating and would reduce degradation of the compounds while trapped in the resin, if they were susceptible to degradation. Examples of these slow release materials include: a) microcylinders composed of metallic cylinders or modified molecules such as 1,2-bis-(10,12-tricosadinoyl)-glycer-3-phosphocholine; (b) liposomes; and (c) cyclodextrins.

While not wishing to be bound to a specific theory regarding the mechanism of action, it is believed that the active agent of the coating composition of this invention, represented by Formula (I), above, functions by producing an environment at the surface of a coated substrate which repels biofouling organisms, thereby preventing their attachment and growth on the coated surface. In this connection, it is conjectured that the compounds of formula (I), above, act as antifoulants by interacting with the cold receptors of the fouling organisms to induce chemotaxis. It is believed that this interaction need not be permanent, and accordingly there is no need for the compounds of formula (I) to be irreversibly consumed in order to exhibit antifoulant activity. It would therefore be desirable to attach the compounds of formula (I) covalently to the film-forming agent, thereby obtaining a coating whose antifoulant ingredient will not be released into the marine environment. The inhibitory effect on the microorganisms may, however, be produced by inhalation, respiration, digestion or imbibition of the active agent by the microorganisms.

Also within the scope of this invention is any article having a surface coated with a coating containing at least one compound of Formula (I) above. The coated articles of the invention can comprise any material to which biofouling organisms are prone to attach, such as metal, wood, concrete, plastic, composite and stone. Representative examples of articles which may benefit from a coating which inhibits attachment and growth of such organisms include boats and ships, and particularly their hulls, berthing facilities, such as piers and pilings, buoys, offshore rigging equipment, intake screens for water distribution systems and decorative or functional cement or stone formations.

The following examples are provided to describe the invention in further detail. These examples are intended merely to illustrate specific embodiments of the compositions, methods and coated articles of the invention, and should in no way be construed as limiting the invention. These examples provide the results of tests conducted to determine the efficacy of certain compounds of the invention in inhibiting settlement of biofouling organisms.

### EXAMPLE 1

### Antifouling Test Methods

### a.. Collection and Culture of Barnacles

Adults of the barnacle, *Balanus amphitrite* Darwin, were collected from the Sacred Heart Marine Research Center at St. Mary's College in Tuticorin, India. The barnacles were crushed and the nauplius stage larvae were collected for culture to the cyprid stage following the method of Rittschof et al., J.Exp. Mar. Biol. Ecol., 82:131-146 (1984). The cyprid is the stage at which the barnacle larva is competent to attach to surfaces. Upon attachment to a surface, the larva then undergoes metamorphosis into a barnacle.

### b. Settlement Assay

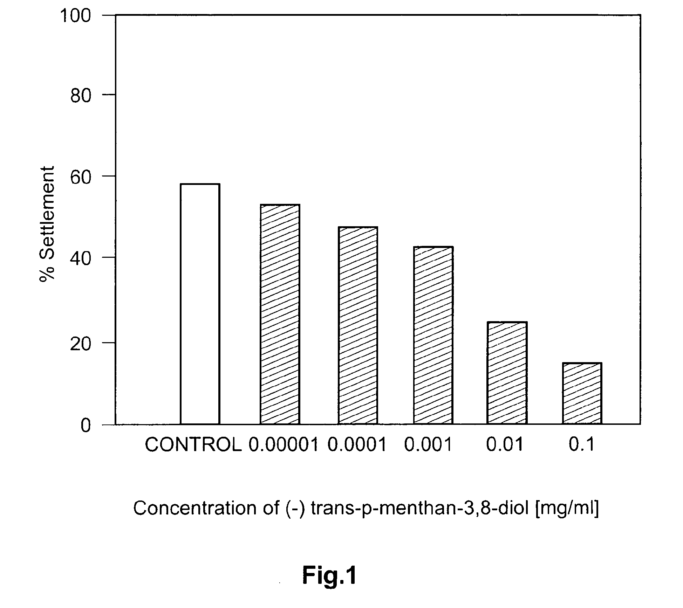

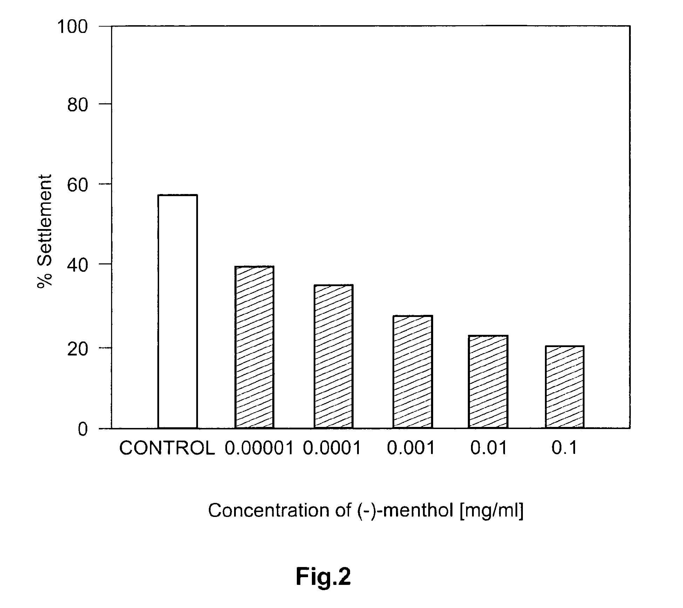

Barnacle settlement assays were undertaken using the method described previously by Rittschof et al., J.Chem. Ecol., 11:551-563 (1985). Briefly, Falcon 50x9 mm plastic petri dishes were filled with 5 ml of filtered seawater at salinity of 33-35 parts per thousand (ppt) and into which 3-day old cyprid stage larvae were added. The test compounds were introduced at various concentrations into the dishes containing seawater. The test compounds included (-)menthol and (-)trans-p-mentan-3,8-diol. Controls were represented by those dishes in which no test compound were added. After incubation at 28°C for 9 hours, the dishes were examined under a dissecting microscope to determine if there was any mortality. The larvae were then killed with 10% formalin and the number of attached and unattached larvae were counted. Settlement data were expressed as the percentage of the larvae attached to the bottom of the dish. The results obtained using (-)-trans-p-methan-3,8-diol are presented in FIG. 1 and the results for (-)-menthol are shown in FIG. 2.

The settlement for each concentration of (-)trans-p-menthan-3,8-diol tested was found to be 51%,45%,41%,27% and 14%, respectively, versus 59% for the control. The lowest percentage of settlement (14%; p<0.05) was obtained using the highest concentration of active agent.

The settlement for each concentration of (-)-menthol tested was found to be 39%, 34%, 26%, 23% and 21%, respectively, versus 58% for the control. Here again, the lowest percentage of settlement (21%; P<0.05) was obtained using the highest concentration of active agent.

The same settlement assay was used to determine the effective concentration of a number of different compounds of formula 1, above. The effective concentration (EC₅₀) is that concentration which inhibited the settlement of fifty percent (50%) of the cyprid stage of the barnacle larvae present in a test sample. It was found that the isomeric form of the active agent tested has considerable influence on the inhibitory effect produced, as can be seen in Table I, below. Compounds having higher cooling effects, with reduced minty aroma, such as (-) isopulegol and menthoxypropanediol showed superior efficacy as antifouling agents.

**TABLE I**

| **COMPOUND** | **EC**_{**50**} **(mg/ml)** |
|---|---|
| (+) cis-p-menthan-3,8-diol | 0.1 |
| (-)-trans-p-menthan-3,8-diol | 0.001 |
| 1R, 2S, 5R-(-)-menthol | 0.004 |
| 1S, 2R, 5S-(+)-menthol | 0.1 |
| ± menthol | 0.1 |
| (-)-menthyl chloride | 0.0001 |
| (-)-menthone | 0.001 |
| (-)-isopulegol | 0.000088 |
| menthoxypropanediol | 0.000002 |

### EXAMPLE 2

### Antimicrobial assays against marine bacteria associated with B. amphitrite

The effect of (-)-menthol as a bacteriostatic compound was tested against nine bacterial strains using standard agar diffusion techniques, as described previously by Avelin et al., J.Chem. Ecol., 19(10), 2155-67 (1993). The bacteria used in the test were as follows: (i) *Aeromonas sp (Ae*_{*1*}*);* (ii) *Aeromonas sp (Ae*_{*2*}*);* (iii) *Alcaligenes sp (Al*_{*1*}*);* (iv) *Alcaligenes sp (Al*_{*2*}*); Flavobacterium sp* (F); (vi) *Pseudomonas* sp (P_{*1*}); (vii) *Pseudomonas sp (P*_{*2*}*);* (viii) *Vibrio sp* (V₁); and (ix) *Vibrio sp (V*_{*2*}*).* Bacterial isolates were grown on agar medium and (-)-menthol was loaded at a concentration of 0.004 mg/ml on the 6.5 mm disks.

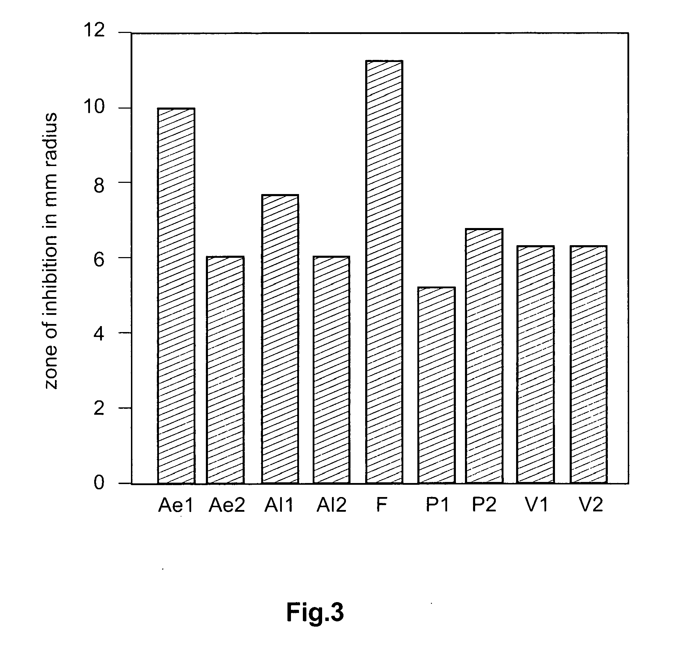

The data show that among the bacterial strains tested, *Aeromonas sp.* (Ae1) and *Flavobacterium sp.* (F) were sensitive to (-)-menthol with a zone of inhibition having a radius greater than 10 mm. The other bacterial strains were moderately sensitive to (-)-menthol. See FIG. 3.

### EXAMPLE 3

### Antimicrobial assays against marine bacteria associated with Perna sp

The test procedure employed was essentially the same as described in Example 2.

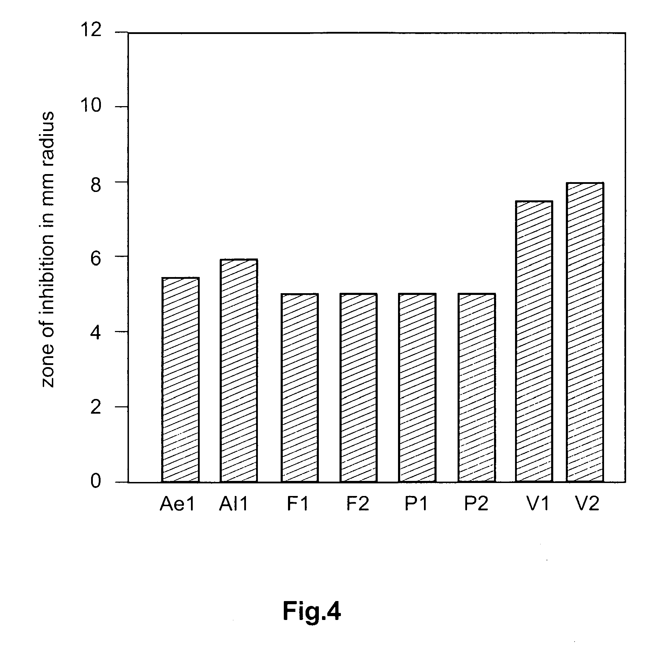

The data obtained show that among the eight bacterial strains tested, *Vibrio sp.* (V₁ & V₂) were sensitive to (-)-menthol, with a zone of inhibition having a radius greater than 8.5 mm. The other bacterial strains were moderately sensitive. See FIG. 4.

### EXAMPLE 4

### Inhibition of Growth of Marine Unicellular Algae

The *in vitro* cell growth inhibition assay used in this test is described in Avelin, et al., J.Chem. Ecol., *supra.*

*Dunaliella tertiolecta* is a marine micro algae cultured in the laboratory. Each test algae was inoculated from stock culture into flasks containing growth medium. (-)-menthol was added to the flask at various concentrations and the growth was monitored on each flask using a haemocytometer at 24-hour intervals up to the death phase of the culture.

The results of this test demonstrate that (-)-menthol was effective in inhibiting the growth of this micro algae in a dose dependent manner. See FIG. 5.

### EXAMPLE 5

### Inhibition of Nitzchia sp Growth Using (-)-menthol

The test procedure employed was substantially the same as described in Example 4, except that *Nitzchia sp.* was substituted for *D. tertiolecta.*

The results of this test establish that (-)-menthol was effective at all of the concentrations tested in inhibiting the growth rate of *Nitzchia sp.,* as compared to the control. See FIG. 6.

### EXAMPLE 6

### Inhibition of Attachment of Fouling Phytoplanktons on Submerged Cement Structures

A raceway measuring 100 feet long, 15 feet wide and 3 feet deep was constructed near the sea and lined with a plastic liner. Seawater was pumped directly from the sea and the growth of naturally occurring plankton was induced by fertilization of the seawater. The total volume of the seawater was approximately 150 cubic meters. The water was circulated and aerated using a paddlewheel. Samples of the seawater were analyzed after 30 days and found to contain the following species of diatoms: *Grammatophoria oceanica, Nitzschia sp., A, inphora sp., Amphora bigilba, Thalassiothrix sp., Stauroneis sp., Licmophora sp.,* and *Navicula sp*. The seawater also contained the dinoflagellate, *Peridium sp.*, and the blue green algae, *Ocillatoria sp.* and *Rivularia sp.*

A conventional paint formulation that was free of any tributyl tin compounds was used as a control. Paint formulations embodying the present invention were prepared by incorporating (-)-menthol and (-)-(trans)-p-menthan-3,8-diol at a dose concentration of 5 percent (5%) by weight of each compound into the same paint vehicle used for the control formulation, and these two formulations were painted on separate surfaces of cement structures placed in the raceway. The controls consisted of unpainted cement surface and surface painted with the control formulation. The painted cement structure was lowered into the raceway and remained continuously exposed to seawater for 60 days. At the end of the exposure period, the cement structures were brought to the surface for inspection. The results of this test are set forth in Table II, below.

**TABLE II**

| **TREATMENT** | **DEGREE OF BIOFOULING *** |
|---|---|
| Unpainted surface | +++++ |
| Control paint | +++++ |
| (-)-menthol | - |
| p-menthan-3,8-diol | - |

| | |
|---|---|
| * The degree of fouling was graded as follows: (+++++) highest amount of fouling attachments, (-) no appreciable fouling attachments. | |

These data also demonstrate that the compositions of the invention are water resistant at least for the duration of the 60 day test period.

### EXAMPLE 7

### Inhibition of Fouling Organisms Using a Marine Paint Composition Containing (-)-menthol and (-)-trans-p-menthan-3,8-diol Separately and in Combination

A floating platform was constructed using layers of bamboo and styrofoam floats. The platform was designed with holders to accommodate test panels measuring 4 inches x 12 inches x 0.25 inches.

A first experimental paint was prepared, containing a biocidally effective amount of cuprous oxide and no other biocide which was used as the control. To this composition was added a combination of 0.5% by weight of (-)-trans-p-menthan-3,8-diol and 0.5% of (-)-menthol (Composition A). A second paint composition was prepared from the same marine paint vehicle containing cuprous oxide, to which was added 2% by weight of (-)-menthol (Composition B). A third formulation was made from the same cuprous oxide-containing marine paint vehicle, to which was added 2% by weight of (-)-trans-p-menthan-3,8-diol (Composition C).

Solid iron panels having the above-mentioned dimensions were painted with the paint formulations thus prepared, placed in the holders in the floating platform and submerged continuously near the center of Bitac Cove in San Dionisio Bay (Philippines) for a period of 78 weeks. The panels were examined for a few minutes every three months and immediately resubmerged after photography. After 78 weeks, the panels were removed and inspected. The numbers of barnacles attached to the panels were counted. The major fouling organisms included the barnacle, *Balanus amphitrite* communis, and the rock oyster, *Crossostrea cuculata.*

The data obtained are set forth in Table III below. These data show that (-)-menthol and (-)-trans-p-menthan-3,8-diol are effective antifouling agents with settlement rates of 16.1 and 27.1%, respectively. When the two compounds were used in combination at the lower concentration of 0.5% by weight each, the protective effect was more evident, with a settlement rate of 5.9%.

**TABLE III**

| **PAINT COMPOSITION** | **Concentration (% w/v)** | | | |
|---|---|---|---|---|
| | **(-)-trans-p- menthan 3,8-diol** | **(-)-menthol** | **# of Barnacles per plate** | **% Settlement** |
| CONTROL | 0 | 0 | 118 | 100 |
| COMPOSITION A | 0.5 | 0.5 | 7 | 5.9 |
| COMPOSITION B | - | 2.0 | 19 | 16.1 |
| COMPOSITION C | 2.0 | - | 32 | 27.1 |

The foregoing example clearly demonstrates that the compositions of the present invention containing compounds of Formula (I) above are effective in preventing the attachment of fouling marine algae and planktonic organisms on the surfaces of underwater structures to which the composition is applied as a coating. These data further show the long lasting water resistance of the compositions of the invention.

### EXAMPLE 8

### Acute Toxicity Assay

The eggs of the brine shrimp, *Artemia salina,* were hatched and maintained in normal seawater at 14 hours of light and 10 hours of darkness for one day. The nauplii were transferred to petri dishes containing various compounds of formula I, above, at different concentrations. After 24 hours, the number of living and dead nauplii were counted. The values were expressed as the concentration that shows toxicity to fifty percent of the brine shrimp nauplii (LD₅₀).

**TABLE IV**

| **CHEMICAL** | **LD**_{**50**} | | |
|---|---|---|---|
| (-)-menthol | | 0.750 g/l | |
| (-)-trans-p-menthan-3,8-diol | > | 3.000 g/l | estimated |
| (-)menthyl chloride | > | 3.000 g/l | estimated |
| (-)menthone | > | 3.000 g/l | estimated |

The data obtained for (-)-menthol, (-)-trans-p-methan 3,8-diol, menthyl chloride and menthone show that toxicity occurred only at extremely high concentrations, indicating the relatively benign effects of these compounds compared to TBT which is toxic at extremely low doses. In the barnacle, *Balanus amphitrite* Darwin, acute toxicity with TBT chloride, for example, occurs at an estimated dose of 3.4 *µ*g (microgram) per liter (or 0.0000034 grams / liter), as described in U.S. Patent # 5,314,932 to Gerhart, et al.

Furthermore, at the effective concentrations (EC50) for (-)-menthol at 0.004 mg/ml, for (-)-trans-p-menthan-3,8-diol at 0.001 mg/ml, for menthyl chloride at 0.0001 mg/ml, and for menthone at 0.001 mg/ml, the nauplii of the barnacle, *Balanus amphitrite* Darwin, did not show any mortality after prolonged exposure to these concentrations, again demonstrating that the antifouling effects observed did not involve any toxic effects.

While certain embodiments of the present invention have been described and/or exemplified above, various other embodiments will be apparent to those skilled in the art from the foregoing disclosure. For example, the utility of the coating compositions of this invention is not limited to protection of marine structures. These compositions may also be advantageously utilized in architectural and industrial coating formulations, as well. The present invention is, therefore, not limited to the particular embodiments described and/or exemplified but is capable of considerable variation and modification without departure from the scope of the appended claims.

### It follows a list of further embodiments of the invention

Embodiment 1. A non-toxic coating composition comprising (i) a compound of the formula: 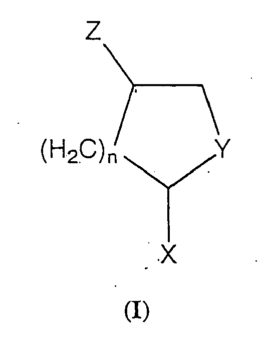 wherein:
   n is an integer 1, 2, or 3;
   X represents hydrogen or a straight or branched chain, substituted or unsubstituted alkyl or a straight or branched chain, substituted or unsubstituted alkenyl;
   Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
   R^{a}, R^{b}, and R^{c} are each independently selected from the group consisting of hydrogen and straight or branched chain, substituted or unsubstituted alkyl; and
   Z is hydrogen or a straight or branched chain, substituted or unsubstituted alkyl, formula (I) including all isomeric forms of said compound; and (ii) a film forming agent, said compound being present in said composition in an amount effective to inhibit the attachment of biofouling organisms on a surface to which said composition is applied.
Embodiment 2. The composition with the features of embodiment 1, wherein n is the integer 2.
Embodiment 3. A composition with the features of embodiment 1, wherein n in said formula is the integer 2, X in said formula represents CH(CH₃)₂, Y in said formula represents HC-OH, and Z in said formula represents CH₃.
Embodiment 4. A composition with the features of embodiment 3, comprising (-)-menthol.
Embodiment 5. A composition with the features of embodiment 1, wherein n in said formula is the integer 2, X in said formula represents C(CH₃)₂OH, Y in said formula represents HCOH, and Z in said formula represents CH₃.
Embodiment 6. A composition with the features of embodiment 5, comprising (-)-trans-p-menthan-3,8-diol.
Embodiment 7. A composition with the features of embodiment 1, wherein n in said formula is the integer 2, X in said formula represents CH(CH₃)₂, Y in said formula represents HC-Cl, and Z in said formula represents CH₃.
Embodiment 8. A composition with the features of embodiment 7, comprising (-)-menthyl chloride.
Embodiment 9. A composition with the features of embodiment 1, wherein n in said formula is the integer 2, X in said formula represents CH(CH₃)₂, Y in said formula represents C=O, and Z in said formula represents CH₃.
Embodiment 10. A composition with the features of embodiment 9, comprising (-)-menthone.
Embodiment 11. A composition with the features of embodiment 1, wherein n in said formula is the integer 2, X in said formula represents CH(CH₃)₂, Y in said formula represents CHOCH₂CHOHCH₂OH, and Z in said formula represents CH₃.
Embodiment 12. A composition with the features of embodiment 11, comprising menthoxypropanediol.
Embodiment 13. A composition with the features of embodiment 1, wherein n in said formula is the integer 2, X in said formula represents C(CH₃)=CH₂, Y in said formula represents CHOH, and Z in said formula represents CH₃.
Embodiment 14. A composition with the features of embodiment 13, comprising (-)-isopulegol.
Embodiment 15. A composition with the features of embodiment 1, wherein said compound is present in an amount from about 0.01 to about 50 percent by weight of said composition.
Embodiment 16. A composition with the features of embodiment 1, wherein said compound is present in an amount from about 0.1 to about 10 percent by weight of said composition.
Embodiment 17. A paint comprising the composition with the features of embodiment 1.
Embodiment 18. A paint with the features of embodiment 17, which is formulated as a marine paint.
Embodiment 19. A varnish comprising the composition with the features of embodiment 1.
Embodiment 20. A composition with the features of embodiment 1, wherein the compound of formula (I) is covalently attached to the film forming agent.
Embodiment 21. A method for protecting a surface exposed to an aqueous environment from fouling organisms present in said aqueous environment, which comprises applying to said surface a coating including a compound of the formula: 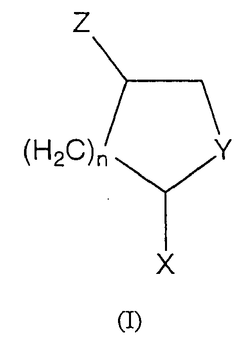 wherein:
   n is an integer 1, 2, or 3;
   X represents hydrogen or a straight or branched chain, substituted or unsubstituted alkyl or a straight or branched chain, substituted or unsubstituted alkenyl;
   Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
   R^{a}, R^{b}, and R^{c} are each independently selected from the group consisting of hydrogen and straight or branched chain, substituted or unsubstituted alkyl; and
   Z is hydrogen or a straight or branched chain, substituted or unsubstituted alkyl, formula (I) including all isomeric forms of said compound.
Embodiment 22. A method with the features of embodiment 21, wherein the coating composition with the features of embodiment 4 is applied to said surface.
Embodiment 23. A method with the features of embodiment 21, wherein the coating composition with the features of embodiment 6 is applied to said surface.
Embodiment 24. A method with the features of embodiment 21, wherein the coating composition with the features of embodiment 8 is applied to said surface.
Embodiment 25. A method with the features of embodiment 21, wherein the coating composition with the features of embodiment 10 is applied to said surface.
Embodiment 26. A method with the features of embodiment 21, wherein the coating composition with the features of embodiment 12 is applied to said surface.
Embodiment 27. A method with the features of embodiment 21, wherein the coating composition with the features of embodiment 14 is applied to said surface.
Embodiment 28. A method with the features of embodiment 21, wherein said coating composition is applied to said surface by brushing, spraying or dipping.
Embodiment 29. A method for protecting a coated surface from attachment and growth of algae and fungi, said method comprising including in the coating formulation applied to said surface a compound of the formula: 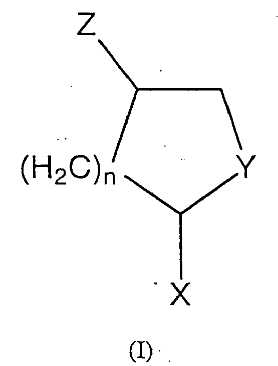 wherein:
   n is an integer 1, 2, or 3;
   X represents hydrogen or a straight or branched chain, substituted or unsubstituted alkyl or a straight or branched chain, substituted or unsubstituted alkenyl;
   Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
   R^{a}, R^{b}, and R^{c} are each independently selected from the group consisting of hydrogen and straight or branched chain, substituted or unsubstituted alkyl; and
   Z is hydrogen or a straight or branched chain, substituted or unsubstituted alkyl, formula (I) including all isomeric forms of said compound.
Embodiment 30. A method with the features of embodiment 29, wherein said coating formulation contains an amount of said compound effective for protection of said coated surface against mold and mildew.
Embodiment 31. A method with the features of embodiment 29, wherein the composition with the features of embodiment 4 is included in said coating formulation.
Embodiment 32. A method with the features of embodiment 29, wherein the composition with the features of embodiment 6 is included in said coating formulation.
Embodiment 33. A method with the features of embodiment 29, wherein the composition with the features of embodiment 8 is included in said coating formulation.
Embodiment 34. A method with the features of embodiment 29, wherein the composition with the features of embodiment 10 is included in said coating formulation.
Embodiment 35. A method with the features of embodiment 29, wherein the composition with the features of embodiment 12 is included in said coating formulation.
Embodiment 36. A method with the features of embodiment 29, wherein the composition with the features of embodiment 14 is included in said coating formulation.
Embodiment 37. An article having an underwater surface, at least a portion of said surface being coated with the composition with the features of embodiment 1.
Embodiment 38. An article with the features of embodiment 37 in the form of a ship hull.
Embodiment 39. An article with the features of embodiment 37 in the form of a piling.
Embodiment 40. An article with the features of embodiment 37 in the form of a water conduit.
Embodiment 41. A non-toxic coating composition comprising (i) a compound of the formula: 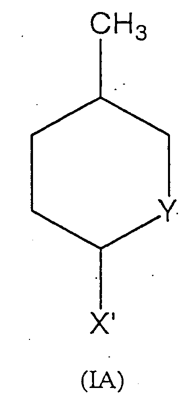 wherein
   X' represents hydrogen or a straight or branched chain, substituted or unsubstituted lower alkyl, or a straight or branched chain, substituted or unsubstituted lower alkenyl;
   Y represents C=O, HC-OR', or HC-Cl, R' being a radical selected from the group consisting of hydrogen or acyl, formula (IA) including all isomeric forms of said compound; and
   (ii) a film forming agent, said compound of formula (IA) being present in an amount effective to inhibit the attachment of biofouling organisms on a surface to which said composition is applied.

## Claims

1. A non-toxic coating composition comprising (i) a compound of the formula: 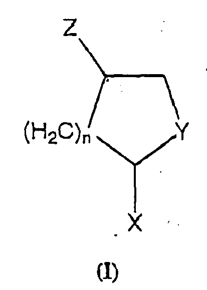 wherein:
n is an integer 1, 2, or 3;
X represents hydrogen or a straight or branched chain, substituted or unsubstituted alkyl or a straight or branched chain, substituted or unsubstituted alkenyl:
Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
R^{a}, R^{b}, and R^{c} are each independently selected from the group consisting of hydrogen and straight or branched chain, substituted or unsubstituted alkyl; and
Z is hydrogen or a straight or branched chain, substituted or unsubstituted alkyl, formula (I) including all isomeric forms of said compound; and (ii) a film forming agent, said compound being present in said composition in an amount effective to inhibit the attachment of biofouling organisms on a surface to which said composition is applied.

2. A composition according to claim 1, comprising (-)-menthol.

3. A composition according to claim 1 comprising (-)-trans-p-menthan-3,8-diol.

4. A composition according to claim 1 comprising (-)-menthone.

5. A composition according to claim 1, comprising menthoxypropanediol.

6. A composition according to claim 1, comprising (-)-isopulegol.

7. A composition according to claim 1, wherein said compound is present in an amount from about 0.01 to about 50 percent by weight of said composition.

8. A paint comprising the composition of claim 1.

9. A composition according to claim 1, wherein the compound of formula (1) is covalently attached to the film forming agent.

10. A method for protecting a surface exposed to an aqueous environment from fouling organisms present in said aqueous environment, which comprises applying to said surface a coating including a compound of the formula: 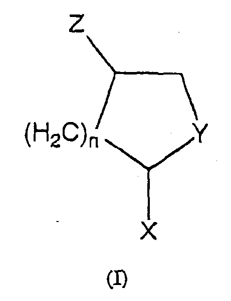 wherein:
n is an integer 1, 2, or 3;
X represents hydrogen or a straight or branched chain, substituted or unsubstituted alkyl or a straight or branched chain, substituted or unsubstituted alkenyl;
Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
R^{a}, R^{b}, and R^{c} are each independently selected from the group consisting of hydrogen and straight or branched chain, substituted or unsubstituted alkyl; and
Z is hydrogen or a straight or branched chain, substituted or unsubstituted alkyl, formula (I) including all isomeric forms of said compound.

11. A method for protecting a coated surface from attachment and growth of algae and fungi, said method comprising including in the coating formulation applied to said surface a compound of the formula: 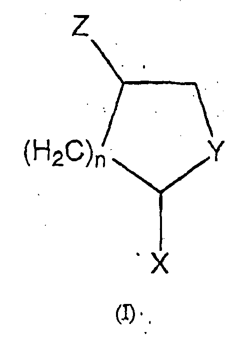 wherein:
n is an integer 1, 2, or 3;
X represents hydrogen or a straight or branched chain, substituted or unsubstituted alkyl or a straight or branched chain, substituted of utisubstituted alkenyl
Y represents C=O or CR¹R², wherein each of R¹ and R² is independently selected from the group consisting of hydrogen, halogen, straight or branched chain, substituted or unsubstituted alkyl, straight or branched chain, substituted or unsubstituted alkenyl, OR^{a}, OC(O)R^{a}, C(O)OR^{a}, NR^{a}R^{b}, C(O)R^{a}, C(O)NR^{a}R^{b}, NR^{a}C(O)NR^{b}R^{c}, C(S)NR^{a}R^{b}, S(O)R^{a}, S(O)₂R^{a}, S(O)₂NR^{a}R^{b}, S(O)NR^{a}, and P(O)R^{a};
R^{a}, R^{b}, and R^{a} are each independently selected from the group consisting of hydrogen and straight or branched chain, substituted or unsubstituted alkyl; and
Z is hydrogen or a straight or branched chain, substituted or unsubstituted alkyl, formula (I) including all isomeric forms of said compound.

12. A method according to claim 11, wherein said coating formulation contains an amount of said compound effective for protection of said coated surface against mold and mildew.

13. A method according to claim 11, wherein the composition of claim 2 is included in said coating formulation.

14. A method according to claim 11, wherein the composition of claim 3 is included in said coating formulation.

15. A method according to claim 11, wherein the composition of claim 4 is included in said coating formulation.

16. A method according to claim 11, wherein the composition of claim 5 is included in said coating formulation.

17. A method according to claim 11, wherein the composition of claim 6 is included in said coating formulation.

18. A non-toxic coating composition comprising (i) a compound of the formula: 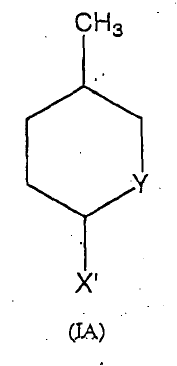 wherein
X' represents hydrogen or a straight or branched chain, substituted or unsubstituted lower alkyl, or a straight or branched chain, substituted or unsubstituted lower alkenyl;
Y represents C=O, HC-OR', or HC-Cl, R' being a radical selected from the group consisting of hydrogen or acyl, formula (IA) including all isomeric forms of said compound; and
(ii) a film forming agent, said compound of formula (IA) being present in an amount effective to inhibit the attachment of biofouling organisms on a surface to which said composition is applied.
